(19) **Europäisches Patentamt European Patent Office Office européen des brevets**

(11) **EP 2 011 696 B1**

(12) **FASCICULE DE BREVET EUROPEEN**

(45) Date de publication et mention
de la délivrance du brevet:
**26.05.2010 Bulletin 2010/21**

(51) Int Cl.:
*B60R 16/023* (2006.01)      *B60W 40/08* (2006.01)
*B60K 35/00* (2006.01)      *B60K 37/00* (2006.01)

(21) Numéro de dépôt: **08158895.6**

(22) Date de dépôt: **24.06.2008**

(54) **Procédé d'aide à la conduite d'un véhicule automobile**

Verfahren zur Unterstützung der Steuerung eines Kraftfahrzeugs

Process of assistance for the control of a motor vehicle

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **02.07.2007 FR 0756228**

(43) Date de publication de la demande:
**07.01.2009 Bulletin 2009/02**

(73) Titulaire: **PEUGEOT CITROËN AUTOMOBILES S.A.**
**78140 Velizy Villacoublay (FR)**

(72) Inventeurs:
• **Lecointre, Bruno**
**38100, GRENOBLE (FR)**
• **Francais, Yves**
**92230, CHATILLON (FR)**

(74) Mandataire: **Ménès, Catherine**
**Peugeot Citroën Automobiles SA**
**Propriété Industrielle (LG081)**
**18, rue des Fauvelles**
**92250 La Garenne Colombes (FR)**

(56) Documents cités:
EP-A- 0 076 764      FR-A- 2 508 102
FR-A- 2 801 846      FR-A- 2 838 821
US-A- 5 916 298      US-A1- 2005 288 850

**Description**

L'invention concerne un procédé d'aide à la conduite d'un véhicule automobile notamment par le calcul d'un indice de sévérité de conduite. L'invention a notamment pour but d'informer le conducteur et/ou les systèmes de contrôle du véhicule ou de ses composants, immédiatement ou en différé, de la sévérité de sa conduite, cette sévérité de conduite tenant compte à la fois du profil de roulage suivi par le conducteur (nervosité de la conduite), mais aussi de la sévérité d'utilisation des organes de conforts (climatisation, ventilation, direction assistée, système audio/vidéo, système de navigation).

L'invention trouve une application particulièrement avantageuse, dans le domaine des véhicules automobiles de tout type, à moteur thermique ou hybride et à boîte de vitesses de type manuelle ou automatique.

US 5, 916, 298 décrit un procédé d'aide à la conduite selon le préambule de la revendication 1.

Les véhicules modernes proposent de plus en plus de fonctions d'aide à la conduite, aussi bien pour améliorer le confort d'utilisation des véhicules que pour accroître la sécurité des occupants et des autres usagers. Parmi ces fonctions, certaines visent à améliorer le confort en s'adaptant le plus possible au comportement du conducteur. C'est par exemple le cas des stratégies auto-adaptatives sur les boîtes de vitesses automatiques et pilotées qui consistent à passer les rapports de la manière qui se rapproche le plus du comportement du conducteur, que ce dernier ait une conduite « plutôt économique » ou « plutôt sportive ».

En connaissant le profil du conducteur (« économique » ou « sport » par exemple), ces stratégies adaptent non seulement les régimes de passages des rapports, mais aussi un certain nombre de modes de fonctionnement spécifiques, comme l'interdiction de passer un rapport montant lorsque le conducteur lève brusquement le pied de la pédale d'accélérateur. Cette interdiction est par exemple plus longue pour un conducteur « sport » qui préfère conserver son rapport de boîte pour disposer du maximum d'accélération lorsqu'il repose son pied sur la pédale d'accélérateur. Au contraire, le conducteur « éco » manifeste plutôt le souhait de passer un rapport supérieur pour diminuer le niveau acoustique et sa consommation en relevant le pied, d'où une temporisation beaucoup plus faible.

Certaines stratégies de gestion du moteur peuvent également tenir compte du profil du conducteur. C'est par exemple le cas de la traduction de l'enfoncement de la pédale en couple moteur de consigne : pour un style de conduite sportive, un faible enfoncement provoque une demande de couple plus importante que pour un style de conduite économique, et ce afin d'augmenter la réactivité pour les conducteurs sportifs.

Actuellement, la reconnaissance du profil du conducteur peut s'effectuer de deux manières différentes :

- Soit par un bouton que le conducteur actionne pour choisir entre différents modes, par exemple « sport », ou « économique »,
- Soit la reconnaissance du profil s'effectue automatiquement par un algorithme d'apprentissage intégré au calculateur moteur ou au calculateur boîte de vitesses. Cet algorithme se base sur l'analyse de l'activité de la pédale d'accélérateur (fréquence et amplitude des mouvements du pied), sur la vitesse véhicule, la pente estimée et sur un indice de virage (calculé à partir des vitesses des roues gauches et droites). Le profil est alors exprimé par une variable normée nommée généralement « indice de sportivité ».

La première manière conduit simplement à une adaptation de certains réglages du véhicule en fonction du choix du conducteur et n'apporte aucune aide permettant au conducteur d'améliorer sa conduite pour refleter le style souhaité. La seconde manière est automatique, de sorte que le conducteur n'a aucune action particulière à effectuer pour sa mise en oeuvre. Par contre, elle nécessite l'analyse de nombreux paramètres et sa calibration est peu aisée car elle fait appel à des paramètres qui n'ont pas d'équivalence directe sur la conduite adoptée (accélérations, consommation, conduite hachée ou non, etc.).

La présente invention vise une méthode pour mesurer la sévérité de la conduite de manière automatique, sans analyser de nombreuses variables liées plus ou moins directement à l'évolution du véhicule, telles que la vitesse, la position de la pédale d'accélérateur, ou la pente.

L'invention concerne plus précisément un procédé d'aide à la conduite d'un véhicule automobile sur un parcours de distance sur lequel le véhicule présente une vitesse moyenne qui comporte au moins une étape de calcul de l'énergie kilométrique du véhicule correspondant à l'énergie consommée par le moteur intégré au véhicule rapportée à la distance du parcours, une étape de calcul des valeurs d'énergie kilométrique minimale et maximale pour la vitesse moyenne du véhicule sur le parcours, un normage de l'énergie kilométrique calculée en la comparant avec les valeurs d'énergie kilométrique minimale et maximale calculées afin d'obtenir l'indice de sévérité et la diffusion de cet indice de sévérité au conducteur et/ou à des moyens de mémorisation de l'information pour une communication différée.

L'énergie consommée par le moteur est de préférence obtenu par intégration du produit du couple du moteur par le régime moteur sur la durée du parcours, ce calcul étant de préférence effectué uniquement sur l'ensemble des périodes où le couple fourni par le moteur est positif. Selon une caractéristique de l'invention, ces valeurs du couple et du régime moteur peuvent être fournies par le calculateur moteur.

Selon une mise en oeuvre de l'invention, pour normer l'indice de sévérité, on calcule le rapport entre l'écart entre l'énergie kilométrique calculée et l'énergie minimale et l'écart entre les énergies minimale et maximale.

Les énergies kilométriques maximale et minimale sont calculées par exemple par l'établissement d'un modèle de l'énergie kilométrique consommée par le véhicule en supposant celle-ci comme dépendant de la somme d'un premier terme dépendant de la masse du véhicule, de l'accélération moyenne du véhicule, et d'un coefficient de pondération représentatif du style de conduite, k étant un coefficient (compris entre 0 et 1) égal au pourcentage de la distance totale réalisé en phase d'accélération, d'un deuxième terme dépendant des caractéristiques aérodynamiques du véhicule et de la vitesse moyenne sur le parcours, et d'un troisième terme dépendant du rapport entre la puissance moyenne consommée par les accessoires équipant le véhicule et la vitesse moyenne sur le parcours, les différents paramètres correspondant à des situations extrêmes d'utilisation de ce véhicule. Un modèle d'énergie kilométrique convenable peut être tel que l'énergie kilométrique est définie par la formule suivante :

$$e(v_{moy})_{kJ/km} \approx k.M.\gamma + \frac{1}{2}\rho_{air}.SC_x.v_{moy}{}^2 + \frac{P_{auxiliaire}}{0.5 * v_{moy}}$$

- $M$ étant la masse maximale du véhicule,
- $k$ étant le coefficient (compris entre 0 et 1) égal au pourcentage de la distance totale réalisé en phase d'accélération,
- $y$ étant l'accélération moyenne du véhicule en m/s$^2$,
- $\rho_{air}$ étant la masse volumique de l'air en kg/m$^3$,
- $S$ étant la surface frontale du véhicule en m$^2$,
- $Cx$ étant le coefficient de pénétration dans l'air,
- $P_{auxiliaire}$ étant la puissance moyenne en watts (W) consommée par les accessoires équipant le véhicule, notamment par la radio, les phares, la climatisation.

Dans ces modèles, pour calculer l'énergie consommée maximale, on choisit de préférence k correspondant à une utilisation du véhicule constituée uniquement d'accélérations et de freinages, soit par exemple k = 0.5 à faible vitesse moyenne (< 50 km/h), et k = 0.1 à haute vitesse moyenne (> 100 km/h), une puissance moyenne consommée par les accessoires équipant le véhicule maximale, et une masse du véhicule maximale, ce véhicule comportant alors le conducteur, plusieurs passagers et des bagages. Pour l'énergie minimale, on supposera par contre une accélération moyenne nulle, une puissance moyenne minimale (correspondant à la puissance dissipée par les seuls accessoires qui ne peuvent être déconnectés) et une masse du véhicule minimale (avec pour seule charge le conducteur).

Selon une mise en oeuvre de l'invention, le calcul de l'énergie kilométrique est effectué de manière continue, sa valeur $e_{k+1}$ à l'instant $t_{k+1}$ étant calculé en faisant la somme de la valeur de cette énergie kilométrique $e_k$ à l'instant $t_k$ et de la valeur du rapport entre l'énergie $E_{k+1}$ consommée par le moteur à l'instant $t_{k+1}$ et la distance parcourue $d_{k+1}$ à l'instant $t_{k+1}$, les termes de cette somme étant pondérés par des coefficients de filtrage (a, b). Avantageusement, la valeur de l'énergie $E_{k+1}$ consommée par le moteur à l'instant $t_{k+1}$ est obtenue en faisant la somme de l'énergie $E_k$ consommée par le moteur à l'instant $t_k$ et du produit entre le couple moteur à l'instant $t_{k+1}$, le régime moteur à l'instant $t_{k+1}$ et la variation de temps entre les instants $t_k$ et $t_{k+1}$.

Le calcul de la vitesse moyenne du véhicule est de préférence effectué de manière continue par échantillonnage, sa valeur à l'instant $t_{k+1}$ étant calculée en divisant la distance $d_{k+1}$ parcourue à l'instant $t_{k+1}$ par la durée pour parcourir cette distance, la distance $d_{k+1}$ parcourue à l'instant $t_{k+1}$ étant obtenue en ajoutant à la distance $d_k$ parcourue à l'instant $t_k$ le produit de la vitesse à l'instant $t_{k+1}$ et de la variation de temps entre $t_k$ et $t_{k+1}$.

Selon une autre mise en oeuvre de l'invention, le calcul de l'énergie kilométrique et de la vitesse moyenne du véhicule est effectué de manière continue suivant les équations suivantes :

$$\begin{cases} E_{k+1} = E_k + C_{k+1} * \Omega_{k+1} * \Delta t \\ d_{k+1} = d_k + v_{k+1} * \Delta t \\ v_{moy\ k+1} = \dfrac{d_{k+1}}{t_{k+1}} \\ e_{k+1} = a * e_k + b * \dfrac{E_{k+1}}{d_{k+1}} \end{cases}$$

- $\Delta t$ étant le pas de calcul en s,
- $k$, $k+1$ représentant les instant $t_k$, $t_{k+1}$ (le calcul ayant lieu à une fréquence fixe $1/\Delta t$),
- $E$ étant l'énergie dépensée en J,
- $C$ étant le couple moteur en N.m,
- $\Omega$ étant le régime moteur en rad/s,
- $e$ étant l'énergie kilométrique en kJ/km,
- $v$ étant la vitesse véhicule en m/s,
- $v_{moy}$ étant la vitesse moyenne en m/s,
- $d$ étant la distance parcourue en m,
- $a,b$ étant des constantes de filtrage de l'énergie kilométrique.

Quelle que soit la mise en oeuvre de l'invention, l'indice de sévérité pourra être communiqué au conducteur au moyen d'un indicateur visuel et/ou audio, par exemple à l'aide d'un cadran comportant un curseur positionné sur une échelle de valeurs normée, les deux extrémités de cette échelle correspondant respectivement aux valeurs minimale et maximale de l'énergie pour la vitesse moyenne du véhicule. Dans une variante, cumulée ou alternative, l'indice sera mémorisé pour une diffusion différée, par exemple une fois que le véhicule est stoppé ou pour être déchargé par exemple vers un ordinateur situé hors du véhicule par exemple pour une analyse par un gestionnaire d'une flotte de véhicules.

Selon une mise en oeuvre de l'invention, l'indice de sévérité pourra être calculé selon une période d'une durée prédéterminée, après l'écoulement de laquelle il est réinitialisé après au moins l'occurrence d'un événement tel que le démarrage du moteur, ouverture de la condamnation centralisée des portières, durée prédéterminée de calcul écoulée

L'aide à la conduite selon l'invention repose ainsi sur une estimateur qui se base sur une analyse énergétique de l'évolution du véhicule. L'invention traduit ainsi la sévérité d'utilisation du véhicule par le conducteur, aussi bien dans la conduite que dans l'utilisation des organes de confort.

En effet, l'énergie consommée par le moteur synthétise à la fois le comportement du conducteur (nombre et amplitude des accélérations) et l'utilisation plus générale du véhicule, notamment la consommation des auxiliaires (organes de confort ou de loisir tels que la climatisation, le système audio/vidéo). L'énergie produite par le moteur correspond à la dépense de carburant ; on peut donc parler d'énergie « dépensée » dans le sens où cette énergie est payée par le conducteur lorsqu'il va à la pompe.

Dans une mise en oeuvre, la dépense énergétique est calculée facilement à partir du couple moteur, du régime moteur et de la vitesse. L'invention permet donc de limiter les besoins de calcul embarqué et de gagner du temps lors de la réalisation de ce calcul.

Dans une mise en oeuvre, l'algorithme calcule un indice normé, par exemple compris entre 0 et 1. A cet effet, on calcule au préalable les valeurs minimales et maximales d'énergie consommable en fonction de la vitesse moyenne du véhicule. On effectue le calcul de l'indice de sévérité normé en comparant l'énergie kilométrique calculée sur le parcours avec les valeurs minimale et maximale lues dans les tables pour la vitesse moyenne correspondant à celle du parcours. Une interpolation linéaire entre les valeurs calculées permet de déterminer l'indice de sévérité normé.

Par parcours, il est entendu au sens de l'invention un parcours physique présentant une distance donnée sur lequel une vitesse moyenne du véhicule peut être estimée, cette vitesse moyenne pouvant par exemple être estimée en divisant la distance du parcours par le temps passé pour effectuer ce parcours, la distance et le temps étant renseignés notamment par le calculateur moteur. Toutefois, la distance du parcours et la vitesse moyenne du véhicule sur ce parcours pourraient aussi être calculés par simulation par un système de navigation non embarqué, ou un gestionnaire d'itinéraires proposé sur Internet.

Les énergies maximale et minimale sont calculées à partir d'un modèle de l'énergie kilométrique consommée par le véhicule. Ce modèle pourrait également être utilisé pour calculer l'énergie consommée par le véhicule, dans le cas où on ne disposerait pas des informations de couple et de régime données par le calculateur moteur, par exemple dans une application non embarquée.

L'indice de sévérité calculé peut être mis à disposition de différents calculateurs assurant le contrôle d'organes du véhicule, tels que le moteur ou la boîte de vitesses, de sorte que ces calculateurs adaptent le comportement de ces organes en fonction de cet indice qui caractérise le type de conduite. Dans un exemple concernant les véhicules équipés de boîte automatique, ces calculateurs peuvent par exemple adapter le régime moteur déterminant un changement de rapport en fonction de l'indice calculé.

Par ailleurs, dans les systèmes existants, l'indice caractérisant la conduite reste une donnée interne des calculateurs et n'est pas affiché par quelque moyen que ce soit. Le conducteur ne peut donc pas savoir comment le véhicule estime son type de conduite.

Dans l'invention, on propose également d'informer le conducteur de sa conduite, par exemple au moyen d'un indicateur visuel et /ou au moyen d'un indicateur audio.

L'estimateur selon l'invention est remis à zéro régulièrement, par exemple au moment d'un redémarrage moteur, d'une ouverture des portes ou au bout d'une durée choisie afin de s'adapter à tout changement de conducteur ou de conduite.

En outre, l'invention peut permettre de calculer des sous-indices, par exemple un sous-indice de sévérité de conduite comportant uniquement l'énergie cinétique, ou encore un sous-indice de sévérité des consommateurs auxiliaires basé uniquement sur la consommation électrique ou mécanique des organes de confort (climatisation, autoradio, chauffage, etc.).

Les procédés connus ne permettent pas cette segmentation de l'indice de sévérité puisque leur calcul n'est pas lié aux paramètres physiques de la dépense énergétique.

Dans une mise en oeuvre, l'indice de sévérité est stocké dans une mémoire dont le contenu peut être déchargé vers un ordinateur non placé dans le véhicule, le déchargement pouvant être effectué via une liaison filaire ou radio. Dans un exemple, la mémoire ne peut être effacée que par un opérateur ayant un mot de passe lui permettant d'y accéder.

L'indice peut ainsi être transmis à un gestionnaire de flotte de véhicules qui pourra analyser le comportement des conducteurs et comprendre par exemple pourquoi la consommation de la flotte présente un niveau élevé. En outre, il sera possible d'identifier les conducteurs ayant besoin d'une formation de conduite apprenant à limiter la consommation.

Bien entendu, l'invention peut être mise en oeuvre sans que l'indice de sévérité soit nécessairement mis à la disposition du conducteur.

L'invention sera mieux comprise à la lecture de la description qui suit et à l'examen des figures qui l'accompagnent. Ces figures ne sont données qu'à titre illustratif mais nullement limitatif de l'invention. Elles montrent :

Figure 1 : une représentation schématique fonctionnelle du calculateur de l'indice de sévérité selon l'invention ;

Figure 2 : une représentation graphique de l'indice de sévérité normé selon l'invention en fonction de l'énergie kilométrique consommée ;

Figures 3a-3b : des représentations schématiques de moyens d'affichage selon l'invention respectivement à échelle de valeurs continue et discrète communiquant au conducteur l'indice de sévérité calculé.

Les éléments identiques conservent la même référence d'une figure à l'autre.

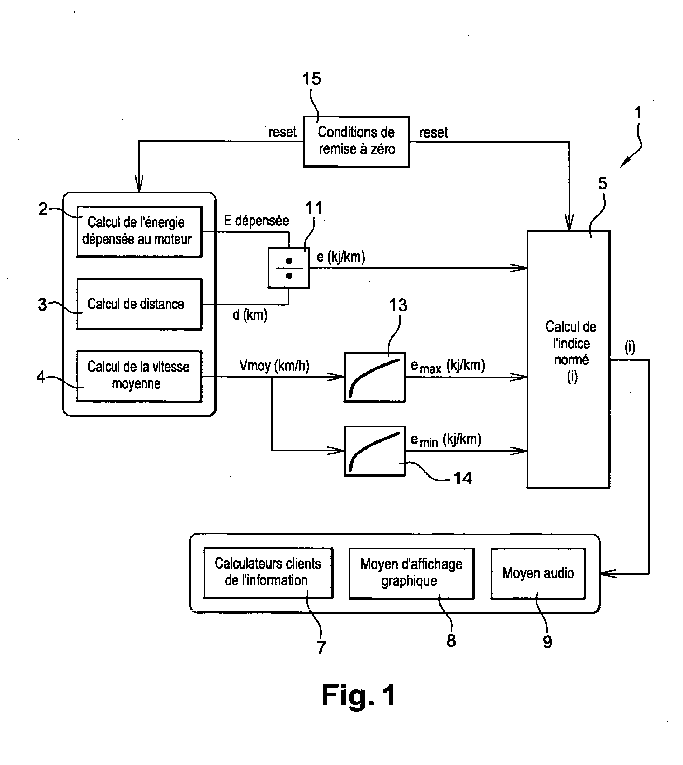

La figure 1 montre une représentation schématique fonctionnelle du calculateur 1 selon l'invention.

Ce calculateur 1 comporte des modules 2-5 qui permettent de calculer l'indice i de sévérité selon l'invention à partir d'une consommation énergétique du véhicule et des modules 7-9 permettant de communiquer au conducteur cet indice i de sévérité.

Plus précisément, le module 2 calcule l'énergie dépensée $E_{dépensée}$ qui contient l'énergie cinétique $E_{cinétique}$ consommée pour accélérer le véhicule, l'énergie $E_{résistance}$ dépensée pour vaincre les efforts de résistance à l'avancement, l'énergie $E_{auxiliaire}$ consommée pour alimenter les organes mécaniques non liés à l'avancement du véhicule, et l'énergie perdue $E_{pertes}$ lors de la transmission de la puissance mécanique du moteur aux roues.

L'énergie cinétique $E_{cinétique}$ dépend directement de la masse du véhicule et des variations de vitesse sur l'ensemble des phases d'accélération et vaut :

$$E_{cinétique} = \sum \frac{1}{2} M \left( v_{finale} - v_{initiale} \right)^2$$

- $M$ étant la masse véhicule en kg,
- $v_{finale}$ étant la vitesse finale du véhicule en m/s et
- $v_{initiale}$ étant la vitesse initiale du véhicule en m/s.

L'énergie $E_{résistance}$ recouvre la résistance aérodynamique rencontrée par le véhicule ainsi que les frottements localisés au contact entre les pneumatiques et le sol, et vaut:

$$E_{résis\,tan\,ce} = \int_{C>0} \left( F_{aéro} + F_{frottement} \right) * v.dt$$

- $F_{aéro}$ étant la force de résistance aérodynamique en N,
- $F_{frottement}$ étant la force de frottement au contact pneu/sol en N,
- $v$ étant la vitesse du véhicule en m/s.
- L'intégrale est calculée uniquement sur les instants où le couple C fourni par le moteur est strictement positif

L'énergie $E_{auxiliaire}$ regroupe la consommation des accessoires électriques (autoradio, direction assistée électrique) qui prélèvent un couple mécanique au moteur par l'intermédiaire de l'alternateur ainsi que des accessoires mécaniques (compresseur de climatisation par exemple) qui prélèvent du couple directement au vilebrequin :

$$E_{auxiliaires} = \int_{C>0} \left( C_{aux\,mécanique} + C_{aux\,électrique} \right) * \Omega.dt$$

- $C_{aux\,mécanique}$ étant le couple prélevé au moteur par les auxiliaires mécaniques en N,
- $C_{aux\,électrique}$ étant le couple prélevé au moteur par l'alternateur sous l'effet des consommateurs électriques en N,
- $\Omega$ étant le régime moteur en rad/s.
- L'intégrale est calculée uniquement sur les instants où le couple C fourni par le moteur est strictement positif

L'énergie $E_{pertes}$ perdue lors de la transmission de la puissance mécanique du moteur jusqu'à la roue englobe les pertes par rendement de l'embrayage, de la boîte de vitesses, ainsi que les pertes dues au léchage des freins :

$$E_{pertes} = \int_{C>0} C_{pertes\,mécaniques} * \Omega.dt$$

- $C_{pertes}$ mécaniques étant le couple de pertes mécanique exprimé au vilebrequin en N,
- $\Omega$ étant le régime moteur en rad/s,
- L'intégrale est calculée uniquement sur les instants où le couple C fourni par le moteur est strictement positif

La somme des énergies consommées (cinétique, résistante, auxiliaires, pertes) est égale à l'énergie dépensée au niveau du moteur :

$$E_{dépensée} = E_{cinétique} + E_{résis\,tan\,te} + E_{auxiliaires} + E_{pertes}$$

L'estimation de chacune de ces énergies est délicate et nécessite une instrumentation complexe et coûteuse. Comme dans l'invention c'est l'énergie totale dépensée $E_{dépensée}$ que l'on cherche, il est très simple de calculer la somme des l'énergies dépensées au niveau du moteur :

$$E_{dépensée} = \int_{C.\Omega>0} C.\Omega.dt$$

- C étant le couple moteur en N.m,
- $\Omega$ étant le régime moteur en rad/s.
- L'intégrale est calculée uniquement sur les instants où la puissance C.$\Omega$ fourni par le moteur est strictement positive

Le calcul de l'énergie dépensée $E_{dépensée}$ se fait sur l'ensemble des périodes où le couple fourni par le moteur est positif ($C > 0$), ce qui garantit que cette énergie correspond bien à une dépense de carburant, contrairement aux instants où le conducteur lève le pied (le couple est alors négatif et la consommation nulle).

Le régime Ω et le couple C moteur étant disponibles sur tous les calculateurs moteur actuels, il n'y a pas de besoin d'instrumentation spécifique.

Pour l'analyse de la sévérité, on calcule l'énergie kilométrique $e_{kJ/km}$ qui correspond à l'énergie dépensée pour parcourir 1 km. A cet effet, le module 3 calcule la distance $d$ sur laquelle cette énergie a été consommée en intégrant la vitesse $v$ du véhicule sur la période de temps $dt$ pendant laquelle l'énergie dépensée $E_{dépensée}$ a été calculée.

La distance $d$ calculée et l'énergie dépensée $E_{dépensée}$ sont transmises au module 11 de division qui calcule alors l'énergie kilométrique $e_{kj/km}$ en divisant l'énergie dépensée $E_{dépensée}$ par la distance $d$ :

$$e_{kJ/km} = \frac{E_{dépensée}}{d} = \frac{\int\limits_{C.\Omega>0} C.\Omega.dt}{\int v.dt}$$

L'énergie $e_{kj/km}$ dépensée ramenée à la distance d parcourue est homogène à l'effort moyen de traction exprimé à la roue en $N$, et est représentative de la sévérité de la conduite puisqu'elle est l'image de la consommation énergétique totale moyenne sur son roulage.

Prenons par exemple l'effet d'une conduite nerveuse : le conducteur accélère et freine de manière répétée. Cela va se traduire par une augmentation de l'énergie cinétique dépensée pour une distance donnée, d'où une énergie kilométrique $e_{kj/km}$ élevée.

A l'opposé, un conducteur calme qui n'accélère qu'une seule fois puis stabilise sa vitesse aura dépensé peu d'énergie cinétique par rapport au conducteur nerveux sur la même distance, d'où une énergie kilométrique $e_{kj/km}$ plus faible.

Pour fournir l'indice $i$ de sévérité, on compare l'énergie kilométrique $e_{kj/km}$ sur le parcours à des références connues.

A cet effet, on remarque que l'énergie kilométrique $e_{kj/km}$ est bornée par une limite inférieure (énergie kilométrique minimale $e_{min}$) et une limite supérieure (énergie kilométrique maximale $e_{max}$) qui peuvent être déterminées par des modèles de phénomènes physiques.

L'énergie kilométrique minimale $e_{min}$ est obtenue pour une énergie cinétique nulle, c'est-à-dire pour un conducteur qui roule à vitesse constante sans jamais accélérer. Cette énergie $e_{min}$ dépend donc de la vitesse du véhicule puisque l'énergie de résistance à l'avancement dépend fortement de la vitesse de roulage.

Pour obtenir cette énergie minimale $e_{min}$, on considère en outre que la consommation des auxiliaires est minimale (climatisation et système audio à l'arrêt, phares éteints) et que le véhicule est à sa masse minimale (conducteur uniquement sans bagage).

Bien que cette énergie minimale $e_{min}$ puisse être déterminée finement par des moyens de simulation précis, on préfère en donner une formulation simplifiée en fonction de la vitesse moyenne $v_{moy}$ du véhicule:

$$e\min(v_{moy})_{kJ/km} \approx \frac{1}{2}\rho_{air}.SC_x.v_{moy}^2 + \frac{P_{auxiliaires\,min\,(W)}}{0.5*v_{moy}}$$

- $\rho_{air}$ étant la masse volumique de l'air en kg/m$^3$,
- $S$ étant la surface frontale du véhicule en m$^2$,
- $Cx$ étant le coefficient de pénétration dans l'air,
- $P_{auxiliaire\,min}$ étant la puissance minimale des auxiliaires consommée en watts (W), notamment par la radio, les phares, et la climatisation.

Par ailleurs, l'énergie kilométrique maximale $e_{max}$ est fonction des performances maximales du véhicule pour une utilisation constituée uniquement d'accélération et de freinage avec une utilisation maximale des auxiliaires et une masse élevée, c'est-à-dire pour un véhicule comportant plusieurs passagers et des bagages.

Là encore, bien que cette énergie maximale $e_{max}$ puisse être déterminée finement par des moyens de simulations précis, on préfère en donner une formulation simplifiée en fonction de la vitesse moyenne $v_{moy}$:

$$e \max(v_{moy})_{kJ/km} \approx k.M.\gamma + \frac{1}{2}\rho_{air}.SC_x.v_{moy}^2 + \frac{P_{auxiliaires\ max\ (W)}}{0.5*v_{moy}}$$

- M étant la masse du véhicule,
- $k$ étant un coefficient (compris entre 0 et 1) égal au pourcentage de la distance totale réalisé en phase d'accélération. k est à choisir en fonction de la vitesse moyenne du véhicule (il sera plus important à basse vitesse où les phases d'accélération sont répétées que sur autoroute). On pourra par exemple choisir k = 0.5 à faible vitesse moyenne (< 50 km/h) et k = 0.1 à haute vitesse moyenne (> 100 km/h),
- $y$ étant l'accélération moyenne du véhicule en m/s$^2$,
- $\rho_{air}$ étant la masse volumique de l'air en kg/m$^3$,
- $S$ étant la surface frontale du véhicule en m$^2$,
- $Cx$ étant le coefficient de pénétration dans l'air,
- $P_{auxiliaire\ max}$ étant la puissance maximale des auxiliaires consommée en watts (W), notamment par la radio, les phares, et la climatisation.

Il est à noter que les paramètres $S$, et $Cx$ sont propres au véhicule étudié et peuvent être lus sur toute plaquette commerciale.

Les énergies minimales $e_{min}$ et maximales $e_{max}$ sont stockées dans des tables pour différentes valeurs de vitesse moyenne $v_{moy}$ du véhicule. Ces tables sont contenues à l'intérieur des modules 13 et 14.

Pour calculer l'indice $i$ de sévérité, le module 4 calcule la vitesse moyenne $v_{moy}$ du véhicule et la transmet aux modules 13 et 14. A l'aide des tables qu'ils contiennent, les modules 13, 14 effectuent alors une corrélation entre la vitesse moyenne $v_{moy}$ calculée et les valeurs d'énergie minimale $e_{min}$ et maximale $e_{max}$ lui correspondant. Les modules 13 et 14 transmettent ces valeurs d'énergie kilométriques extrêmes $e_{min}$ et $e_{max}$ au module 5.

Le module 5 calcule alors l'indice $i$ normé par comparaison de l'énergie kilométrique $e_{kj}$ et des valeurs minimale $e_{min}$ et maximale $e_{max}$ qui lui ont été transmises.

A cet effet, le module 5 effectue une interpolation linéaire entre ces valeurs minimale $e_{min}$ et maximale $e_{max}$ sur le point réel de valeur d'énergie kilométrique. Pour cela le module 5 met en oeuvre la formule suivante :

$$i = \frac{e_{kJ/km} - e\min_{kJ/km(Vmoy)}}{e\max_{kJ/km(Vmoy)} - e\min_{kJ/km(Vmoy)}}$$

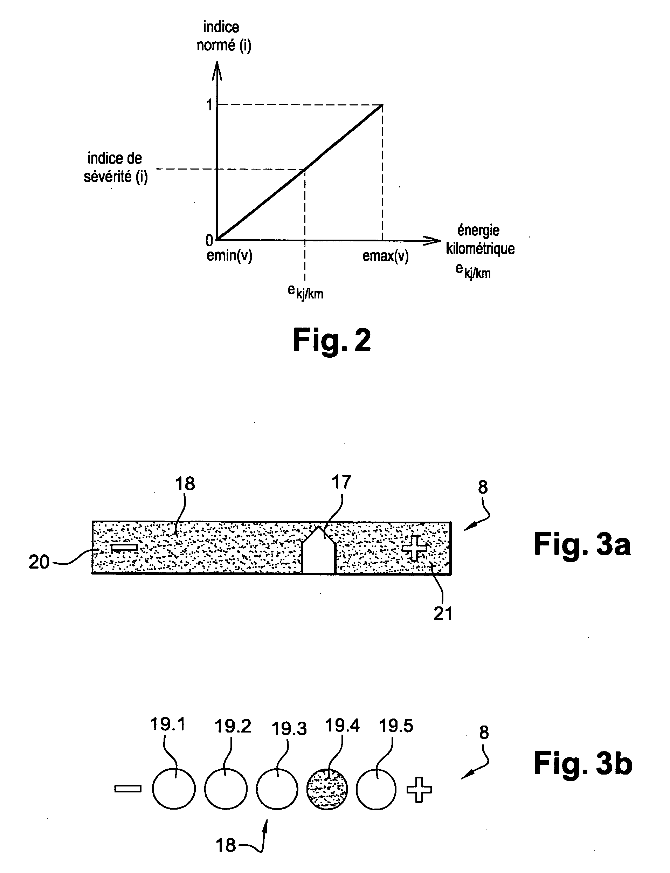

La figure 2 montre la représentation graphique de l'indice i de sévérité i en fonction de l'énergie kilométrique $e_{kj/km}$ selon la formule ci-dessus. L'indice de sévérité $i$ est compris entre 0 et 1, $i$ valant 0 pour la valeur minimale $e_{min}$ d'énergie kilométrique et 1 pour la valeur maximale $e_{max}$ d'énergie kilométrique.

Le calcul de l'énergie kilométrique $e_{kj/km}$ dépensée et de la vitesse moyenne $v_{moy}$ peut être réalisé en continu jusqu'à la prochaine phase de réinitialisation. Ce calcul est très simple et nécessite peu de mémoire. On peut par exemple le réaliser à l'aide des formules suivantes :

$$\begin{cases} E_{k+1} = E_k + C_{k+1} * \Omega_{k+1} * \Delta t \\ d_{k+1} = d_k + v_{k+1} * \Delta t \\ v_{moy\ k+1} = \dfrac{d_{k+1}}{t_{k+1}} \\ e_{k+1} = a * e_k + b * \dfrac{E_{k+1}}{d_{k+1}} \end{cases}$$

- $\Delta t$ étant le pas de calcul en s,
- $k, k+1$ représentant les instant $t_k$, $t_{k+1}$ (le calcul ayant lieu à une fréquence fixe 1/$\Delta$t),

- $E$ étant l'énergie dépensée en J,
- $C$ étant le couple moteur en N.m,
- $\Omega$ étant le régime moteur en rad/s,
- $e$ étant l'énergie kilométrique en kJ/km,
- $v$ étant la vitesse véhicule en m/s,
- $v_{moy}$ étant la vitesse moyenne en m/s,
- $d$ étant la distance parcourue en m,
- $a,b$ étant des constantes de filtrage de l'énergie kilométrique.

L'indice $i$ de sévérité peut ensuite être mis à disposition des contrôleurs 7 utilisant cette information pour adapter leur comportement au conducteur. L'indice $i$ peut ainsi être transmis au contrôleur de boîte de vitesses qui adapte les temps de passage de vitesse en fonction de la nervosité du conducteur.

Par ailleurs, comme l'invention est basée sur une approche physique de la sévérité (par l'énergie consommée) et qu'on est capable de borner cette sévérité par rapport à des comportements extrêmes de référence (les énergies kilométriques minimale $e_{min}$ et maximale $e_{max}$), l'indice a un sens physique et peut être compris par le conducteur. On peut donc envisager de mettre cette information à disposition du conducteur via un moyen d'affichage 8 ou audio 9.

A cet effet, comme représenté sur la figure 3a, le moyen d'affichage 8 comporte un curseur 17 indiquant le niveau de sévérité normé de sa conduite sur une échelle 18 de valeurs normée, les extrémités 20 et 21 correspondant respectivement aux valeurs minimale $e_{min}$ et maximale $e_{max}$ de l'énergie kilométrique pour la vitesse moyenne $v_{moy}$ du véhicule calculée.

Le curseur 17 peut avoir par exemple la forme d'une flèche qui se déplace de manière continue entre ces deux extrêmes. La zone proche de l'extrémité 20 correspondant à l'énergie minimale $e_{min}$ pourrait par exemple présenter une couleur claire bleu ou verte, tandis que la zone proche de l'extrémité 21 correspondant à l'énergie maximale $e_{max}$ pourrait par exemple présenter une couleur foncée telle que du rouge afin d'attirer l'attention du conducteur sur sa conduite très consommatrice de carburant.

En variante, comme représenté sur la figure 3b, on discrétise l'échelle 18 de valeurs en utilisant un affichage à indicateurs lumineux 19.1-19.5 discrets. Les indicateurs 19.1 et 19.5 extrêmes correspondent respectivement aux valeurs minimales $e_{min}$ et maximales $e_{max}$ de l'énergie kilométrique pour la vitesse moyenne $v_{moy}$ calculée. L'indicateur lumineux correspondant à l'indice de sévérité calculé (ici l'indicateur 19.4) pourra par exemple avoir une couleur différente de celle des autres voyants pour indiquer au conducteur où il se situe sur l'échelle de la sévérité de conduite.

D'autres formes graphiques sont bien entendu possibles.

En outre, le calculateur 1 selon l'invention peut comporter également un indicateur 9 audio de l'indice $i$ de sévérité. Cet indicateur 9 diffuse un message vocal indiquant au conducteur la sévérité de sa conduite depuis le dernier démarrage du moteur. De préférence, pour ne pas perturber le conducteur, le message est diffusé lorsqu'il éteint son moteur ou plus généralement lorsqu'il est à l'arrêt moteur en marche ou à l'arrêt.

Dans une mise en oeuvre, plusieurs messages pré enregistrés correspondant à différents niveaux de l'indice (i) de sévérité normé sont mémorisés et peuvent être utilisés pour informer le conducteur. Par exemple, le message pourra être : *« Votre conduite sur ce parcours a été très économique / économique / sportive / très sportive ».* Les qualificatifs correspondant à :

- « très économique » si l'indice normé entre 0 et 1 est inférieur à 0,25
- « économique » si l'indice normé entre 0 et 1 est compris entre 0,25 et 0,5
- « sportif » si l'indice normé entre 0 et 1 est compris entre 0,5 et 0,75
- « très sportif » si l'indice normé entre 0 et 1 est supérieur à 0,75

En variante, l'énergie kilométrique $e_{kj/km}$ peut être directement communiquée au conducteur pour l'informer de la sévérité de sa conduite.

Comme le comportement du conducteur peut évoluer dans le temps, et que plusieurs conducteurs différents peuvent utiliser le même véhicule, on remet de préférence à jour régulièrement le module 5 de calcul de l'indice $i$ de sévérité ainsi que les modules 2-4 au moyen d'un module 15 d'initialisation représenté sur la figure 1.

A cet effet, le module 15 réinitialise les modules 2-4 à chaque démarrage du moteur. En variante, le module 15 effectue la remise à zéro sur chaque ouverture de la condamnation centralisée des portières ou au bout d'une certaine durée de calcul.

**Revendications**

1. Procédé d'aide à la conduite d'un véhicule automobile sur un parcours de distance (d) sur lequel le véhicule présente une vitesse moyenne ($v_{moy}$), **caractérisé en ce qu'**il comporte les étapes suivantes :

- calculer l'énergie kilométrique ($e_{kj/km}$) du véhicule correspondant à l'énergie consommée par le moteur ($E_{dépensée}$) intégré au véhicule rapportée à la distance ($d$) du parcours,
- calculer des valeurs d'énergie kilométrique minimale ($e_{min}$) et maximale ($e_{max}$) pour la vitesse moyenne ($v_{moy}$) du véhicule sur le parcours,
- normer l'énergie kilométrique ($e_{kj/km}$) calculée en la comparant avec les valeurs d'énergie kilométrique minimale ($e_{min}$) et maximale ($e_{max}$) calculées afin d'obtenir l'indice de sévérité ($i$), et
- diffuser cet indice de sévérité ($i$) au conducteur et/ou à des moyens de mémorisation de l'information pour une communication différée.

2.  Procédé selon la revendication 1, **caractérisé en ce que** pour calculer l'énergie consommée par le moteur ($E_{dépensée}$), on intègre le produit du couple ($C$) du moteur par le régime ($\Omega$) moteur sur la durée du parcours.

3.  Procédé selon la revendication 1 ou 2, **caractérisé en ce que** le calcul de l'énergie consommée par le moteur ($E_{dépensée}$) est effectué sur l'ensemble des périodes où le couple ($C$) fourni par le moteur est positif.

4.  Procédé selon la revendication 2 ou 3, **caractérisé en ce que** le couple ($C$) et le régime moteur ($\Omega$) sont fournis par le calculateur moteur.

5.  Procédé selon l'une des revendications 1 à 4, **caractérisé en ce que** pour normer l'indice ($i$) de sévérité, on calcule le rapport entre

- l'écart entre l'énergie kilométrique ($e_{kj/km}$) calculée et l'énergie minimale ($e_{min}$) et,
- l'écart entre les énergies minimale ($e_{min}$) et maximale ($e_{max}$).

6.  Procédé selon l'une des revendications 1 à 5, **caractérisé en ce que** pour calculer les énergies kilométrique maximale ($e_{max}$) et minimale ($e_{min}$),

- on établit un modèle de l'énergie kilométrique ($e_{kj/km}$) consommée par le véhicule en supposant celle-ci comme dépendant de la somme :
- d'un premier terme dépendant de la masse ($M$) du véhicule, de l'accélération moyenne ($\gamma$) du véhicule, et d'un coefficient ($k$) de pondération représentatif du style de conduite, $k$ étant un coefficient (compris entre 0 et 1) égal au pourcentage de la distance totale réalisé en phase d'accélération,
- d'un deuxième terme dépendant des caractéristiques aérodynamiques du véhicule et de la vitesse moyenne ($v_{moy}$) sur le parcours,
- d'un troisième terme dépendant du rapport entre la puissance moyenne ($P_{auxiliaire}$) consommée par les accessoires équipant le véhicule et la vitesse moyenne ($_{Vmoy}$) sur le parcours, et
- on choisit les paramètres ($k, M, \gamma, P_{auxiliaire}$) de ce modèle correspondant à des situations extrêmes d'utilisation de ce véhicule.

7.  Procédé selon la revendication 6, **caractérisé en ce que** le modèle d'énergie kilométrique est défini suivant la formule suivante :

$$e(v_{moy})_{kJ\ km} \approx k.M.\gamma + \frac{1}{2}\rho_{air}.SC_x.v_{moy}{}^2 + \frac{P_{auxiliaire}}{0.5*v_{moy}}$$

- M étant la masse maximale du véhicule,
- k étant le coefficient (compris entre 0 et 1) égal au pourcentage de la distance totale réalisé en phase d'accélération,
- $\gamma$ étant l'accélération moyenne du véhicule en m/s$^2$,
- $\rho_{air}$ étant la masse volumique de l'air en kg/m$^3$,
- $S$ étant la surface frontale du véhicule en m$^2$,
- $Cx$ étant le coefficient de pénétration dans l'air,
- $P_{auxiliaire}$ étant la puissance moyenne en watts (W) consommée par les accessoires équipant le véhicule, notamment par la radio, les phares, la climatisation.

8. Procédé selon la revendication 6 ou 7, **caractérisé en ce que** pour calculer l'énergie consommée maximale ($e_{max}$), on choisit

    - k correspondant à une utilisation du véhicule constituée uniquement d'accélérations et de freinages, soit par exemple k = 0.5 à faible vitesse moyenne (< 50 km/h), et k = 0.1 à haute vitesse moyenne (> 100 km/h),
    - une puissance moyenne ($P_{auxiliaire}$) consommée par les accessoires équipant le véhicule maximale, et
    - une masse du véhicule ($M$) maximale, ce véhicule comportant alors le conducteur, plusieurs passagers et des bagages.

9. Procédé selon l'une des revendications 6 à 8, **caractérisé en ce que** pur calculer l'énergie consommée minimale ($e_{min}$) on choisit

    - une accélération moyenne nulle, soit k=0,
    - une puissance moyenne ($P_{auxiliaire}$) consommée par les accessoires équipant le véhicule minimale, et
    - une masse du véhicule (M) minimale, ce véhicule comportant alors uniquement le conducteur.

10. Procédé selon l'une des revendications 1 à 9, **caractérisé en ce que** le calcul de l'énergie kilométrique est effectué de manière continue, sa valeur $e_{k+1}$ à l'instant $t_{k+1}$ étant calculé en faisant la somme de la valeur de cette énergie kilométrique $e_k$ à l'instant $t_k$ et de la valeur du rapport entre l'énergie $E_{k+1}$ consommée par le moteur à l'instant $t_{k+1}$ et la distance parcourue $d_{k+1}$ à l'instant $t_{k+1}$, les termes de cette somme étant pondérés par des coefficients de filtrage (a, b),

11. Procédé selon la revendication 10, **caractérisé en ce que** la valeur de l'énergie $E_{k+1}$ consommée par le moteur à l'instant $t_{k+1}$ est obtenue en faisant la somme de l'énergie $E_k$ consommée par le moteur à l'instant $t_k$ et du produit entre le couple moteur à l'instant $t_{k+1}$, le régime moteur à l'instant $t_{k+1}$ et la variation de temps entre les instants $t_k$ et $t_{k+1}$.

12. Procédé selon l'une des revendications 1 à 11, **caractérisé en ce que** le calcul de la vitesse moyenne est effectué de manière continue par échantillonnage, sa valeur à l'instant $t_{k+1}$ étant calculée en divisant la distance $d_{k+1}$ parcourue à l'instant $t_{k+1}$ par la durée pour parcourir cette distance, la distance $d_{k+1}$ parcourue à l'instant $t_{k+1}$ étant obtenue en ajoutant à la distance $d_k$ parcourue à l'instant $t_k$ le produit de la vitesse à l'instant $t_{k+1}$ et de la variation de temps entre $t_k$ et $t_{k+1}$.

13. Procédé selon l'une des revendications 1 à 12, **caractérisé en ce que** le calcul de l'énergie kilométrique et de la vitesse moyenne du véhicule est effectué de manière continue suivant les équations suivantes :

$$\begin{cases} E_{k+1} = E_k + C_{k+1} * \Omega_{k+1} * \Delta t \\ d_{k+1} = d_k + v_{k+1} * \Delta t \\ v_{moy\, k+1} = \dfrac{d_{k+1}}{t_{k+1}} \\ c_{k+1} = a * e_k + b * \dfrac{E_{k+1}}{d_{k+1}} \end{cases}$$

    - $\Delta t$ étant le pas de calcul en s,
    - $k$, $k+1$ représentant les instant $t_k$, $t_{k+1}$ (le calcul ayant lieu à une fréquence fixe 1/$\Delta$t),
    - $E$ étant l'énergie dépensée en J,
    - $C$ étant le couple moteur en N.m,
    - $\Omega$ étant le régime moteur en rad/s,
    - $e$ étant l'énergie kilométrique en kJ/km,
    - $v$ étant la vitesse véhicule en m/s,
    - $v_{moy}$ étant la vitesse moyenne en m/s,
    - $d$ étant la distance parcourue en m,

- *a.b* étant des constantes de filtrage de l'énergie kilométrique

**14.** Procédé selon l'une des revendications 1 à 13, **caractérisé en ce que** l'indice de sévérité est communiqué au conducteur pour l'informer de la sévérité de sa conduite, au moyen d'un indicateur visuel (8) et/ou audio (9).

**15.** Procédé selon la revendication 14, **caractérisé en ce que** l'indice ($i$) de sévérité est affiché au moyen d'un curseur positionné sur une échelle (18) de valeurs normée, les deux extrémités (20, 21) de cette échelle correspondant respectivement aux valeurs minimale ($e_{min}$) et maximale ($_{2max}$) de l'énergie pour la vitesse moyenne ($V_{moy}$) du véhicule.

**16.** Procédé selon l'une des revendications 1 à 15, **caractérisé en ce** le calcul de l'indice ($i$) de sévérité est réinitialisé après au moins l'occurrence d'un événement suivant : démarrage du moteur, ouverture de la condamnation centralisée des portières, durée prédéterminée de calcul écoulée.

**17.** Procédé selon l'une des revendications 1 à 16, **caractérisé en ce que** l'indice ($i$) de sévérité peut être déchargé vers un ordinateur non placé dans le véhicule.

**Claims**

**1.** Method for assisting the driving of a motor vehicle on a route having a distance (d) over which the vehicle exhibits an average speed ($v_{avg}$), **characterized in that** it includes the following steps:

- calculating the energy per kilometre ($e_{kj/km}$) of the vehicle corresponding to the energy consumed by the engine ($E_{spent}$) incorporated in the vehicle related to the distance ($d$) of the route,
- calculating the minimum ($e_{min}$) and maximum ($e_{max}$) values of energy per kilometre for the average speed ($v_{avg}$) of the vehicle on the route,
- normalizing the calculated energy per kilometre ($e_{kj/km}$) by comparing it with the minimum ($e_{min}$) and maximum ($e_{max}$) calculated values of energy per kilometre in order to obtain the severity index ($i$), and
- broadcasting this severity index ($i$) to the driver and/or to information storage means for a deferred communication.

**2.** Method according to Claim 1, **characterized in that** in order to calculate the energy consumed by the engine ($E_{spent}$), the product of the torque ($C$) of the engine and the engine speed ($\Omega$) is integrated over the duration of the route.

**3.** Method according to either Claim 1 or Claim 2, **characterized in that** the energy consumed by the engine ($E_{spent}$) is calculated over all the periods in which the torque ($C$) supplied by the engine is positive.

**4.** Method according to either Claim 2 or Claim 3, **characterized in that** the torque ($C$) and the engine speed ($\Omega$) are supplied by the engine computer.

**5.** Method according to any one of Claims 1 to 4, **characterized in that** in order to normalize the severity index ($i$), one calculates the ratio of

- the difference between the calculated energy per kilometre ($e_{kj/km}$) and the minimum energy ($e_{min}$) and,
- the difference between the minimum energy ($e_{min}$) and maximum energy ($e_{max}$).

**6.** Method according to any one of Claims 1 to 5, **characterized in that** in order to calculate the maximum ($e_{max}$) and minimum ($e_{min}$) values of energy per kilometre,

- a model is created of the energy per kilometre ($e_{kj/km}$) consumed by the vehicle, assuming that the energy per kilometre is dependant on the sum:

- of a first term dependant on the mass ($M$) of the vehicle, on the average acceleration ($\gamma$) of the vehicle, and on a weighting coefficient ($k$) representing the driving style, where $k$ is a coefficient (between 0 and 1) equal to the percentage of the total distance covered when accelerating,
- of a second term dependent on the aerodynamic characteristics of the vehicle and on the average speed ($v_{avg}$) on the route,

- of a third term dependent on the ratio of the average power ($P_{auxiliary}$) consumed by the accessories equipping the vehicle and the average speed ($v_{avg}$) on the route, and
- the parameters ($k, M, \gamma, P_{auxlliary}$) of this model are chosen to correspond to extreme scenarios of use of this vehicle.

**7.** Method according to Claim 6, **characterized in that** the model of energy per kilometre is defined according to the following formula:

$$e\left(v_{avg}\right)_{kJ/km} \approx k.M.\gamma + \frac{1}{2}\rho_{air}.SC_x.v_{avg}^{\ 2} + \frac{P_{auxiliary}}{0.5*v_{avg}}$$

- where M is the maximum mass of the vehicle,
- k is the coefficient (between 0 and 1) equal to the percentage of the total distance covered when accelerating,
- $\gamma$ is the average acceleration of the vehicle in m/s$^2$,
- $\rho_{air}$ is the density of air in kg/m$^3$,
- $S$ is the frontal area of the vehicle in m$^2$,
- $C_x$ is the drag coefficient in air,
- $P_{auxilliary}$ is the average power in watts (W) consumed by the accessories equipping the vehicle, in particular the radio, the headlights and the air conditioning system.

**8.** Method according to either Claim 6 or Claim 7, **characterized in that** in order to calculate the maximum energy consumed ($e_{max}$), one chooses

- k to correspond to a use of the vehicle made up only of acceleration and braking actions, i.e. for example k = 0.5 at low average speed (< 50 km/h), and k = 0.1 at high average speed (> 100 km/h),
- an average power ($P_{auxiliary}$) consumed by the accessories equipping the vehicle in the maximal state, and
- a maximum vehicle mass ($M$), this vehicle hence containing the driver, several passengers and luggage.

**9.** Method according to any one of Claims 6 to 8, **characterized in that** in order to calculate the minimum energy consumed ($e_{min}$), one chooses

- a zero average acceleration, i.e. k=0,
- an average power ($P_{auxiliary}$) consumed by the accessories equipping the vehicle in the minimal state, and
- a minimum vehicle mass ($M$), this vehicle hence containing only the driver.

**10.** Method according to any one of Claims 1 to 9, **characterized in that** the energy per kilometre is calculated continuously, its value $e_{k+1}$ at the instant $t_{k+1}$ being calculated by summing the value of this energy per kilometre $e_k$ at the instant $t_k$ and the value of the ratio between the energy $E_{k+1}$ consumed by the engine at the instant $t_{k+1}$ and the distance travelled $d_{k+1}$ at the instant $t_{k+1}$, the terms of this sum being weighted by filtering coefficients (a, b).

**11.** Method according to Claim 10, **characterized in that** the value of the energy $E_{k+1}$ consumed by the engine at the instant $t_{k+1}$ is obtained by summing the energy $E_k$ consumed by the engine at the instant $t_k$ and the product of the engine torque at the instant $t_{k+1}$, the engine speed at the instant $t_{k+1}$ and the variation in time between the instants $t_k$ and $t_{k+1}$.

**12.** Method according to any one of Claims 1 to 11, **characterized in that** the average speed is calculated continuously by sampling, its value at the instant $t_{k+1}$ being calculated by dividing the distance $d_{k+1}$ travelled at the instant $t_{k+1}$ by the time to cover this distance, the distance $d_{k+1}$ travelled at the instant $t_{k+1}$ being obtained by adding to the distance $d_k$ travelled at the instant $t_k$ the product of the speed at the instant $t_{k+1}$ and the variation in time between $t_k$ and $t_{k+1}$.

**13.** Method according to any one of Claims 1 to 12, **characterized in that** the energy per kilometre and the average speed of the vehicle are calculated continuously according to the following equations:

$$\begin{cases} E_{k+1} = E_k + C_{k+1} * \Omega_{k+1} * \Delta t \\ d_{k+1} = d_k + v_{k+1} * \Delta t \\ v_{moy\,k+1} = \dfrac{d_{k+1}}{t_{k+1}} \\ e_{k+1} = a * e_k + b * \dfrac{E_{k+1}}{d_{k+1}} \end{cases}$$

- where $\Delta t$ is the calculation step in s,
- $k$, $k+1$ represent the instants $t_k$, $t_{k+1}$ (the calculation taking place at a fixed frequency 1/$\Delta t$),
- $E$ is the spent energy in $J$,
- $C$ is the engine torque in N.m,
- $\Omega$ is the engine speed in rad/s,
- $e$ is the energy per kilometre in kJ/km,
- $v$ is the vehicle speed in m/s,
- $v_{avg}$ is the average speed in m/s,
- $d$ is the distance travelled in m,
- $a.b$ are filtering constants for the energy per kilometre.

**14.** Method according to any one of Claims 1 to 13, **characterized in that** the severity index is communicated to the driver to inform him of the severity of his driving, by means of a visual (8) and/or audible (9) indicator.

**15.** Method according to Claim 14, **characterized in that** the severity index ($i$) is displayed by means of a cursor positioned on a scale (18) of normalized values, the two ends (20, 21) of this scale corresponding to the minimum value ($e_{min}$) and maximum value ($e_{max}$) respectively of the energy for the average speed ($v_{avg}$) of the vehicle.

**16.** Method according to any one of Claims 1 to 15, **characterized in that** the calculation of the severity index ($i$) is reinitialized after at least the occurrence of an event: engine startup, opening of the central door locking system, predetermined calculation time elapsed.

**17.** Method according to any one of Claims 1 to 16, **characterized in that** the severity index ($i$) can be uploaded to a computer that is not in the vehicle.

**Patentansprüche**

**1.** Fahrhilfeverfahren für ein Kraftfahrzeug auf einer Strecke einer Entfernung (d), auf der das Fahrzeug eine Durchschnittsgeschwindigkeit ($v_{moy}$) hat, **dadurch gekennzeichnet, dass** es die folgenden Schritte aufweist:

- Berechnung der Energie pro Kilometer ($e_{kj/km}$) des Fahrzeugs entsprechend der vom im Fahrzeug befindlichen Motor verbrauchten Energie ($E_{dépensée}$) bezogen auf die Entfernung (d) der Strecke,
- Berechnung der minimalen ($e_{min}$) und maximalen ($e_{max}$) Werte der Energie pro Kilometer für die Durchschnittsgeschwindigkeit ($v_{moy}$) des Fahrzeugs auf der Strecke,
- Normierung der berechneten Energie pro Kilometer ($e_{kj/km}$) durch ihren Vergleich mit den berechneten minimalen ($e_{min}$) und maximalen ($e_{max}$) Werten der Energie pro Kilometer, um den Härtegrad (i) zu erhalten, und
- Senden dieses Härtegrads (i) an den Fahrer und/oder an Einrichtungen zum Speichern der Information für eine verzögerte Mitteilung.

**2.** Verfahren nach Anspruch 1, **dadurch gekennzeichnet, dass** zur Berechnung der vom Motor verbrauchten Energie ($E_{dépensée}$) das Produkt aus dem Drehmoment (C) des Motors und der Drehzahl ($\Omega$) des Motors über die Dauer der Strecke integriert wird.

**3.** Verfahren nach Anspruch 1 oder 2, **dadurch gekennzeichnet, dass** die Berechnung der vom Motor verbrauchten Energie ($E_{dépensée}$) an der Gesamtheit der Perioden durchgeführt wird, in denen das vom Motor gelieferte Drehmoment (C) positiv ist.

4. Verfahren nach Anspruch 2 oder 3, **dadurch gekennzeichnet, dass** das Drehmoment (C) und die Motordrehzahl ($\Omega$) vom Motor-Rechner geliefert werden.

5. Verfahren nach einem der Ansprüche 1 bis 4, **dadurch gekennzeichnet, dass** zum Normieren des Härtegrads (i) das Verhältnis berechnet wird zwischen

- der Abweichung zwischen der berechneten Energie pro Kilometer ($e_{kj/km}$) und der minimalen Energie ($e_{min}$) und
- die Abweichung zwischen der minimalen ($e_{min}$) und der maximalen ($e_{max}$) Energie.

6. Verfahren nach einem der Ansprüche 1 bis 5, **dadurch gekennzeichnet, dass** zur Berechnung der maximalen ($e_{max}$) und minimalen ($e_{min}$) Energie pro Kilometer

- ein Modell der vom Fahrzeug verbrauchten Energie pro Kilometer ($e_{kj/km}$) erstellt wird, indem angenommen wird, dass diese von der Summe abhängt:

- eines ersten Summands, der von der Masse (M) des Fahrzeugs, von der Durchschnittsbeschleunigung ($\gamma$) des Fahrzeugs und von einem für den Fahrstil repräsentativen Gewichtungskoeffizient (k) abhängt, wobei k ein Koeffizient (zwischen 0 und 1) gleich dem Prozentsatz der in der Beschleunigungsphase zurückgelegten Gesamtentfernung ist,
- eines zweiten Summands, der von den aerodynamischen Eigenschaften des Fahrzeugs und von der Durchschnittsgeschwindigkeit ($v_{moy}$) auf der Strecke abhängt,
- eines dritten Summands, der vom Verhältnis zwischen der von den das Fahrzeug bestückenden Zubehörteilen verbrauchten Durchschnittsleistung ($P_{auxiliaire}$) und der Durchschnittsgeschwindigkeit ($v_{moy}$) auf der Strecke abhängt, und
- die Parameter (k, M, $\gamma$, Pauxiliaire) dieses Modells entsprechend extremen Nutzungssituationen dieses Fahrzeugs gewählt werden.

7. Verfahren nach Anspruch 6, **dadurch gekennzeichnet, dass** das Modell der Energie pro Kilometer gemäß der folgenden Formel definiert wird:

$$E\left(v_{moy}\right)_{kJ/km} \approx k \cdot M \cdot \gamma + \frac{1}{2}\rho_{air} \cdot SC_x \cdot v_{moy}^{2} + \frac{P_{auxiliaire}}{0.5 * v_{moy}}$$

wobei:

- M die maximale Masse des Fahrzeugs ist,
- k der Koeffizient (zwischen 0 und 1) gleich dem Prozentsatz der in der Beschleunigungsphase zurückgelegt Gesamtentfernung ist,
- $\gamma$ die Durchschnittsbeschleunigung des Fahrzeugs in m/s$^2$ ist,
- $\rho_{air}$ die Luftdichte in kg/m$^3$ ist,
- S die Frontfläche des Fahrzeugs in m$^2$ ist,
- $C_x$ der Eindringkoeffizient in die Luft ist,
- $P_{auxiliaire}$ die Durchschnittsleistung in Watt (W) ist, die von den das Fahrzeug bestückenden Zubehörteilen verbraucht wird, insbesondere vom Radio, von den Scheinwerfern, von der Klimaanlage.

8. Verfahren nach Anspruch 6 oder 7, **dadurch gekennzeichnet, dass** zur Berechnung der maximalen verbrauchten Energie ($e_{max}$) gewählt wird

- k entsprechend einer Nutzung des Fahrzeugs, die nur aus Beschleunigungen und Bremsvorgängen besteht, d.h. zum Beispiel k = 0.5 bei geringer Durchschnittsgeschwindigkeit (< 50 km/h), und k = 0.1 bei hoher Durchschnittsgeschwindigkeit (> 100 km/h),
- eine maximale Durchschnittsleistung ($P_{auxiliaire}$), die von den das Fahrzeug bestückenden Zubehörteilen verbraucht wird, und
- eine maximale Masse des Fahrzeugs (M), wobei dieses Fahrzeug dann den Fahrer, mehrere Fahrgäste und Gepäck aufweist.

9. Verfahren nach einem der Ansprüche 6 bis 8, **dadurch gekennzeichnet, dass** zur Berechnung der minimalen verbrauchten Energie ($\theta_{min}$) gewählt wird

- eine Durchschnittsbeschleunigung Null, d.h. k=0,
- eine minimale Durchschnittsleistung ($P_{auxiliaire}$), die von den das Fahrzeug bestückenden Zubehörteilen verbraucht wird, und
- eine minimale Masse des Fahrzeugs (M), wobei dieses Fahrzeug dann nur den Fahrer aufweist.

10. Verfahren nach einem der Ansprüche 1 bis 9, **dadurch gekennzeichnet, dass** die Berechnung der Energie pro Kilometer kontinuierlich durchgeführt wird, wobei ihr Wert $e_{k+1}$ im Augenblick $t_{k+1}$ durch Bilden der Summe des Werts dieser Energie pro Kilometer $e_k$ im Augenblick $t_k$ und des Werts des Verhältnisses zwischen der vom Motor im Augenblick $t_{k+1}$ verbrauchten Energie $E_{k+1}$ und der im Augenblick $t_{k+1}$ zurückgelegten Entfernung $d_{k+1}$ berechnet wird, wobei die Summanden dieser Summe durch Filterkoeffizienten (a, b) gewichtet werden.

11. Verfahren nach Anspruch 10, **dadurch gekennzeichnet, dass** der Wert der vom Motor im Augenblick $t_{k+1}$ verbrauchten Energie $E_{k+1}$ durch Bilden der Summe der vom Motor im Augenblick $t_k$ verbrauchten Energie $E_k$ und des Produkts aus dem Motordrehmoment im Augenblick $t_{k+1}$, der Motordrehzahl im Augenblick $t_{k+1}$ und der Zeitveränderung zwischen den Augenblicken $t_k$ und $t_{k+1}$ erhalten wird.

12. Verfahren nach einem der Ansprüche 1 bis 11, **dadurch gekennzeichnet, dass** die Berechnung der Durchschnittsgeschwindigkeit kontinuierlich durch Abtasten durchgeführt wird, wobei ihr Wert im Augenblick $t_{k+1}$ berechnet wird, indem die im Augenblick $t_{k+1}$ zurückgelegte Entfernung $d_{k+1}$ durch die Dauer, um diese Entfernung zurückzulegen, dividiert wird, wobei die im Augenblick $t_{k+1}$ zurückgelegte Entfernung $d_{k+1}$ durch Hinzufügen zur im Augenblick $t_k$ zurückgelegten Entfernung $d_k$ des Produkts aus der Geschwindigkeit im Augenblick $t_{k+1}$ und aus der Zeitveränderung zwischen $t_k$ und $t_{k+1}$ erhalten wird.

13. Verfahren nach einem der Ansprüche 1 bis 12, **dadurch gekennzeichnet, dass** die Berechnung der Energie pro Kilometer und der Durchschnittsgeschwindigkeit des Fahrzeugs kontinuierlich gemäß den folgenden Gleichungen durchgeführt wird:

$$\begin{cases} E_{k+1} = E_k + C_{k+1} * \Omega_{k+1} * \Delta t \\ d_{k+1} = d_k + v_{k+1} * \Delta t \\ v_{moyk+1} = \dfrac{d_{k+1}}{t_{k+1}} \\ e_{k+1} = a * e_k + b * \dfrac{E_{k+1}}{d_{k+1}} \end{cases}$$

wobei

- $\Delta t$ der Rechenschritt in s ist,
- k, k+1 die Augenblicke $t_k$, $t_{k+1}$ darstellen (wobei die Berechnung mit fester Frequenz $1/\Delta t$ stattfindet),
- E die verbrauchte Energie in J ist,
- C das Motordrehmoment in N.m ist,
- $\Omega$ die Motordrehzahl in rad/s ist,
- e die Energie pro Kilometer in kJ/km ist,
- v die Fahrzeuggeschwindigkeit in m/s ist,
- $v_{moy}$ die Durchschnittsgeschwindigkeit in m/s ist,
- d die zurückgelegte Entfernung in m ist,

- a,b Filterkonstanten der Energie pro Kilometer sind.

**14.** Verfahren nach einem der Ansprüche 1 bis 13, **dadurch gekennzeichnet, dass** der Härtegrad dem Fahrer, um ihn über die Härte seines Fahrstils zu informieren, mittels eines visuellen (8) und/oder Audio-Anzeigers (9) mitgeteilt wird.

**15.** Verfahren nach Anspruch 14, **dadurch gekennzeichnet, dass** der Härtegrad (i) mittels eines auf einer genormten Wertskala (18) angeordneten Cursors angezeigt wird, wobei die zwei Enden (20, 21) dieser Skala dem minimalen Wert ($e_{min}$) bzw. dem maximalen Wert ($e_{max}$) der Energie für die Durchschnittsgeschwindigkeit ($v_{moy}$) des Fahrzeugs entsprechen.

**16.** Verfahren nach einem der Ansprüche 1 bis 15, **dadurch gekennzeichnet, dass** die Berechnung des Härtegrads (i) nach mindestens dem Auftreten eines folgenden Ereignisses neu initialisiert wird: Starten des Motors, Öffnen der Zentralverriegelung der Türen, vorbestimmte Rechendauer abgelaufen.

**17.** Verfahren nach einem der Ansprüche 1 bis 16, **dadurch gekennzeichnet, dass** der Härtegrad (i) zu einem Computer hin entladen werden kann, der sich nicht im Fahrzeug befindet.

EP 2 011 696 B1

**Fig. 1**

18

EP 2 011 696 B1

Fig. 2

Fig. 3a

Fig. 3b

19

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5916298 A